## Europäisches Patentamt
## European Patent Office
## Office européen des brevets

(19)

(11) Veröffentlichungsnummer: **0 064 145**
**A1**

(12) **EUROPÄISCHE PATENTANMELDUNG**

(21) Anmeldenummer: **82102054.2**

(22) Anmeldetag: **13.03.82**

(51) Int. Cl.$^3$: **C 03 B 7/08**
**C 03 B 7/10**

(30) Priorität: **02.04.81 DE 3113304**

(43) Veröffentlichungstag der Anmeldung:
**10.11.82 Patentblatt 82/45**

(84) Benannte Vertragsstaaten:
**AT BE CH FR GB IT LI NL SE**

(71) Anmelder: **VEBA-GLAS Aktiengesellschaft**
**Ruhrglasstrasse 50**
**D-4300 Essen 12(DE)**

(72) Erfinder: **Knoth, Werner-Dieter**
**Byfangerstrasse 175**
**D-4300 Essen 15(DE)**

(72) Erfinder: **Hüllen, Helmut**
**Dreilindenstrasse 93**
**D-4300 Essen 1(DE)**

(72) Erfinder: **Kopatz, Klaus**
**Wrangelstrasse 30a**
**D-4250 Bottrop(DE)**

(74) Vertreter: **Spalthoff, Adolf, Dipl.-Ing.**
**Pelmanstrasse 31 P.O. Box 34 02 20**
**D-4300 Essen 1(DE)**

(54) **Speisevorrichtung für Glastropfen.**

(57) Eine Speisereinrichtung (1) hat die Aufgabe, einen kontinuierlich fließenden Glasstrang austreten zu lassen und in bestimmt bemessene Abschnitte (Tropfen) zu unterteilen, damit das Gewicht der einzelnen Abschnitte festzulegen und danach das endgültige Abtrennen vorzunehmen. Es ist bekannt, die Antriebe der mechanisch bewegten Teile (3, 4) einer Speisereinrichtung (1) mit Druckluft zu beaufschlagen. Infolge der Kompressibilität der Luft und abhängig u.a. von der Leitungslänge, deren freien Querschnitt sowie dem herrschenden Druck ist eine genaue Steuerung nicht möglich, besonders dann, wenn die zu bewegenden Massen groß sind. Um diese Nachteile zu beseitigen wird erfindungsgemäß vorgeschlagen, daß als Antriebe für die translatorischen Bewegungen des Stopfens (4) sowie des Rohres (3) hydraulische Axial-Kolben-Einheiten (6, 7) und für die Rotationsbewegung der Schneideinrichtung (5) ein hydraulischer Drehkolben (8) vorgesehen sind. Die Drehbewegung des Rohres (3) erfolgt mittels eines hydraulischen Drehkolbens.

1          0064145

"Speisereinrichtung"

Die Erfindung betrifft eine Speisereinrichtung, welche eine
Schüssel mit einer Bodenöffnung aufweist, der ein auf- und
abbeweglicher Stopfen zugeordnet ist, welcher von einem Rohr
umgeben ist, wobei unterhalb der Bodenöffnung der Schüssel
eine Schneideinrichtung vorgesehen ist.

Eine derartige Speisereinrichtung hat die Aufgabe, einen
kontinuierlich fließenden Glasstrang austreten zu lassen
und in bestimmt bemessene Abschnitte (Tropfen) zu unterteilen, damit das Gewicht der einzelnen Abschnitte festzulegen und danach das endgültige Abtrennen vorzunehmen.
Eine zumeist elektrische Kopplung mit der nachgeschalteten
Glasformmaschine synchronisiert die Bewegungen dieser Speisereinrichtung mit der Glasformmaschine. Es ist bekannt, die
Antriebe der mechanisch bewegten Teile einer derartigen Speisereinrichtung mit Druckluft zu beaufschlagen, was jedoch
mit einer Reihe von Nachteilen verbunden ist, wie nachstehend
dargelegt.

Wird z.B. eine Bewegung durch expandierende Preßluft ausgelöst, so tritt zwischen den die Luft freigebenen Ventilen und
dem Beginn der Bewegung, z.B. eines Kolbens mit einem Zylinder, eine Verzögerung ein. Diese ist bedingt durch die Kom-

2

pressibilität der Luft und abhängig u.a. von der Leitungslänge, derem freien Querschnitt sowie dem herrschenden Druck
der Luft. Eine genaue Steuerung, insbesondere bei schnellerer
Schaltfolge, wird immer schwieriger, besonders dann, wenn die
zu bewegenden Massen groß sind.

Ein weiterer, sehr erheblicher Nachteil besteht darin, daß
ein Preßluftzylinder als Antriebsaggregat nur eine Entweder-/
Oder-Stellung kennt. Luft strömt z.B. auf die eine Seite des
Kolbens in einen Zylinder und drückt durch den sich aufbauenden Druck solange auf den Kolben, bis dieser die andere Endstellung erreicht hat. Das gleiche gilt dann für den umgekehrten Vorgang. Ein Anhalten in einer bestimmten Zwischenstellung ist nicht möglich, weil durch die Kompressibilität
der Luft eine Druckveränderung eine Kolbenwegveränderung zur
Folge hat.

Andere Mechanismen der Speisereinrichtung werden dadurch angetrieben, daß ihr Antriebspunkt auf einer Kurvenscheibe gleitet. Bei höheren Geschwindigkeiten beginnt sich der Fühler auf
der Kurvenscheibe von dieser abzuheben. Damit ist aber sowohl
der Antriebsvorgang als auch die Synchronisation gestört.

Um diese Nachteile zu beseitigen wird erfindungsgemäß vorgeschlagen, daß als Antriebe für die translatorischen Bewegungen

3

des Stopfens sowie des Rohres hydraulische Axial-Kolben-
Einheiten und für die Rotationsbewegung der Schneideinrichtung ein hydraulischer .Drehkolben vorgesehen sind.

Die ständige Drehbewegung des Rohres kann mittels eines
hydraulischen Drehkolbens durchgeführt werden, der ggf.
mit der hydraulischen Axial-Kolben-Einheit für die translatorische Bewegung gekoppelt sein kann.

Der hydraulische Drehkolben ist über Zahnräder, Exzenter
od.dgl. mit den Schneidelementen der Schneideinrichtung
derart verbunden, daß diese eine Scheren-Bewegung ausführen, so daß von dem flüssigen Glasstrang Abschnitte
(Tropfen) bestimmter Abmessungen abgetrennt werden.

Alle hydraulischen Antriebe der Speisereinrichtung sind
durch Umschaltventile od.dgl. betätigt, welche von einem
Rechner und Prozessor gesteuert sind. Der Rechner und Prozessor erhält einen Taktgeber, der in einfacher Weise durch
Ankopplung an sämtliche dem Synchronverhalten unterworfenen
weiteren Produktionselemente, wie Glasformmaschinen, Kühlofeneinschieber usw. steuert. Außerdem erhält dieser Befehle
für Weg, Zeit, Geschwindigkeit usw., um die Bewegungsabläufe
der hydraulischen Antriebe optimal zu steuern. Auf diese Weise

*4*

wird ein präzises Steuern und Kontrollieren sowohl der beweglichen Teile der Speisereinrichtung einerseits nach Zeitendstellung und Zwischenstellung andererseits aber auch der anderen durch den Synchronismus angeschlossenen Maschinenelemente erreicht.

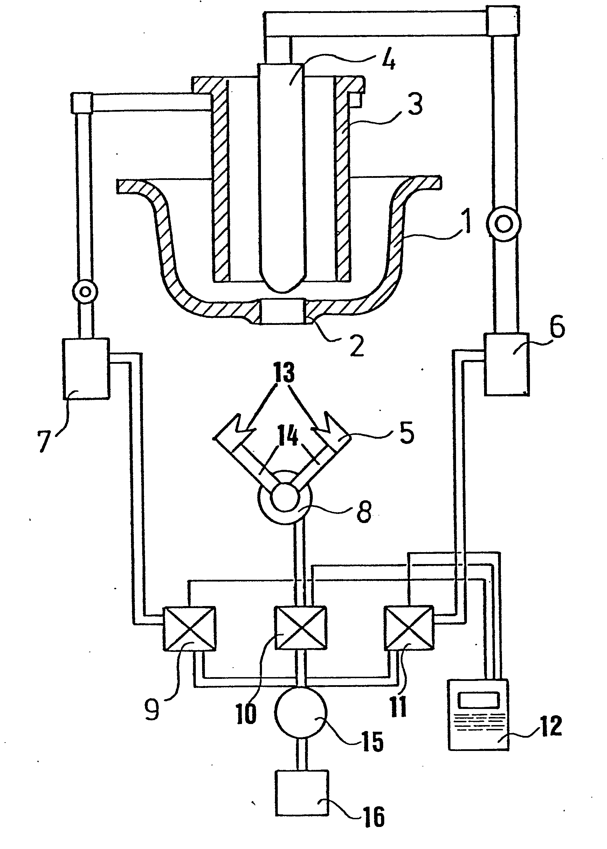

Ein Ausführungsbeispiel der Erfindung ist an Hand der Zeichnung näher erläutert, und zwar zeigt diese in schematischer Darstellung eine Speisereinrichtung mit darunter befindlicher Schneideinrichtung.

Mit 1 ist die Schüssel der Speisereinrichtung bezeichnet, welche eine Bodenöffnung 2 aufweist, der ein auf- und abbewegbarer Stopfen 4 zugeordnet ist, der von einem Rohr 3 aus Ton mit Abstand umgeben ist. Der Glasfluß in der Schüssel 1 wird durch das Tonrohr 3 und den Stopfen 4 so geregelt, daß der nicht weiter dargestellte Glasstrang nach dem Austritt aus der Bodenöffnung 2 durch die Schneideinrichtung 5 in einzelne Abschnitte (Tropfen) zerteilt wird. Die translatorische Hubbewegung des Stopfens 4 wird mittels einer hydraulischen Axial-Kolben-Einheit 6 bewirkt. Die translatorische Höhenbewegung des sich im allgemeinen drehenden Rohres 3 erfolgt über die hydraulische Axial-Kolben-Einheit 7..

5

Die Schneideinrichtung 5, welche eine rotatorische Winkelbewegung ausführt, wird von einem hydraulischen Drehkolben
8 angetrieben. Dieser kann direkt über eine Drehachse die
beiden Schneidelemente 13 der Schneideinrichtung 5 betätigen. Durch Zahnräder wird zusätzlich eine Bewegung erzeugt,
derart, daß sich die Arme 14 der Schneideinrichtung 5 aufeinander zu- oder voneinander wegbewegen.

Durch Öldruck werden die hydraulischen Antriebe 6, 7, 8
durch diese jeweils zugeordnete Umschaltventile 9, 10, 11
betätigt. Diese Umschaltventile 9, 10, 11 wiederum werden
angesteuert durch Impulse aus dem elektronischen Rechner und Prozessor 12.

Zum Hydraulikantrieb gehört ferner eine Pumpe 15 und ein
Sammelbehälter 16.

Insbesondere der durch die elektronische, prozessorgesteuerte Hydraulikantriebsvorrichtung ist bei der Speisereinrichtung in der Lage, auch physikalisch-chemische Zustandswerte des Glases in der Speichereinrichtung selbst
zu berücksichtigen. Hierzu werden elektrische Geber eingesetzt, z.B. Temperaturen, Viskosität und andere Darstellungen. Mittels eines Analog-Digitalwandlers erhält dann der Rechner und der Prozessor 10 die Eingaben dieser physikalischen und/oder chemischen Werte, die dann ggf. zu einer Korrektur der hydraulischen Antriebe 6, 7, 8 führen.

Dipl.-Ing. A. Spalthoff
Patentanwalt

D-43 Essen 1, den   1. 4. 198?
Pelmanstraße 31
Postschließfach 34 02 20
Telefon (0201) 77 2008

0064145

Akten-Nr. 24 178 S/O
in der Antwort bitte angeben

VEBA-GLAS AG

4300 Essen 12

# PATENTANSPRÜCHE :

1. Speisereinrichtung, welche eine Schüssel mit einer Bodenöffnung aufweist, der ein auf- und abbeweglicher Stopfen zugeordnet ist, welcher von einem Rohr umgeben ist, wobei unterhalb der Bodenöffnung der Schüssel eine Schneideinrichtung
vorgesehen ist, dadurch gekennzeichnet, daß als Antriebe für
die translatorischen Bewegungen des Stopfens (4) sowie des
Rohres (3) hydraulische Axial-Kolben-Einheiten (6,7) und für
die Rotationsbewegung der Schneideinrichtung (5) ein hydraulischer Drehkolben (8) vorgesehen sind.

2. Speisereinrichtung nach Anspruch 1, dadurch gekennzeichnet,
daß die Drehbewegung des Rohres (3) mittels eines hydraulischen
Drehkolbens erfolgt.

3. Speisereinrichtung nach Anspruch 1 und/oder 2, <u>dadurch</u> <u>gekennzeichnet</u>, daß der Drehkolbenantrieb (8) über Zahnstangen, Exzenter od.dgl. mit den Schneidelementen (13) der Schneideinrichtung (5) derart verbunden ist, daß diese eine Scherenbewegung ausführen.

4. Speisereinrichtung nach Anspruch 1 und/oder einem oder mehreren der vorhergehenden, <u>dadurch gekennzeichnet</u>, daß alle hydraulischen Antriebe (6,7,8) durch Umschaltventile (9,10,11) od.dgl. betätigt sind, welche von einem Rechner und Prozessor (12) gesteuert sind.

**Europäisches Patentamt**

## EUROPÄISCHER RECHERCHENBERICHT

EP  82 10 2054

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X,Y | US-A-2 950 571  (WYTHE) <br> *Insgesamt* | 1,4 | C 03 B    7/08 <br> C 03 B    7/10 |
| | --- | | |
| Y | US-A-3 736 826  (WARD) <br> *Insgesamt* | 1,3 | |
| | --- | | |
| Y | DE-C-  965 265  (PUTSCH) <br> *Insgesamt* | 1 | |
| | --- | | |
| A | DE-C-  866 238  (VAN DE WALLE) <br> *Insgesamt* | ˙1 | |
| | --- | | |
| A | US-A-1 790 984  (GREER) <br> *Insgesamt* | 1,2 | |
| | ----- | | |

**RECHERCHIERTE SACHGEBIETE (Int. Cl. ³)**

C 03 B    7/00

Der vorliegende Recherchenbericht wurde für alle Patentansprüche erstellt.

| Recherchenort <br> DEN HAAG | Abschlußdatum der Recherche <br> 16-06-1982 | Prüfer <br> VAN DEN BOSSCHE W.L. |
|---|---|---|

EPA Form 1503. 03.82

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument